# FASCICULE DE BREVET EUROPEEN

(11) **EP 3 404 690 B1**
(45) Date de publication et mention de la délivrance du brevet: **01.04.2020**
(21) Numéro de dépôt: 18172962.5
(22) Date de dépôt: 17.05.2018
(51) Int. Cl.: H01H 50/04, H01H 50/06

(54) **ELÉMENT AMOVIBLE DE COUPURE D'UN COURANT ÉLECTRIQUE ET APPAREIL ÉLECTRIQUE DE COUPURE D'UN COURANT ÉLECTRIQUE COMPRENANT UN TEL ÉLÉMENT AMOVIBLE DE COUPURE**
ENTFERNBARES UNTERBRECHUNGSELEMENT FÜR ELEKTRISCHEN STROM, UND ELEKTRISCHES UNTERBRECHUNGSGERÄT EINES ELEKTRISCHEN STROMS, DAS EIN SOLCHES ENTFERNBARES ELEMENT UMFASST
REMOVABLE ELEMENT FOR INTERRUPTING AN ELECTRICAL CURRENT AND ELECTRICAL INTERRUPTER OF AN ELECTRICAL CURRENT COMPRISING SUCH A REMOVABLE INTERRUPTING ELEMENT

(30) Priorité: 17.05.2017 FR 1754349
(43) Date de publication de la demande: 21.11.2018
(73) Titulaire: Schneider Electric Industries SAS, 92500 Rueil-Malmaison (FR)
(72) Inventeur: LARCHER, Patrick, 38050 Grenoble Cedex 09 (FR); COMTOIS, Patrick, 38050 Grenoble Cedex 09 (FR)
(74) Mandataire: Lavoix

(56) Documents cités:
- EP-A2- 0 344 687
- US-A- 3 962 658
- US-A- 4 326 693
- US-A1- 2010 079 973

## Description

L'invention concerne un élément amovible de coupure électrique pour un appareil électrique de coupure. L'invention concerne également un appareil électrique de coupure de courant électrique comprenant un tel élément amovible de coupure.

On connaît des appareils électriques pour couper un courant électrique, tels que des contacteurs, qui comportent un ou plusieurs éléments amovibles de coupure insérés dans des logements d'une embase de l'appareil. Ces éléments amovibles sont parfois connus sous le nom d'ampoule de coupure. Un tel élément amovible est, par exemple, décrit dans FR 2 999 790.

US 4,326,693 décrit un relais débrochable avec une fenêtre pour observer la condition des contacts.

Généralement, chaque élément amovible est connecté à des plages de connexion de l'appareil électrique et a pour rôle d'interrompre sélectivement la circulation d'un courant électrique entre ces plages. Pour ce faire, chaque élément amovible comporte des conducteurs électriques séparables dont le déplacement est commandé par un actionneur dédié entre une position ouverte et une position fermée par rapport aux contacts électriques fixes pour interrompre ou, respectivement, autoriser le passage du courant électrique.

De tels éléments amovibles ont pour avantage d'être interchangeables et donc d'être faciles à remplacer lors d'opérations de maintenance ou en cas de dysfonctionnements.

Toutefois, il existe un besoin pour permettre à un opérateur d'inspecter l'intérieur de l'élément amovible, par exemple pour jauger visuellement l'état d'usure des contacts électriques, au cours d'opérations de maintenance préventive, sans avoir à détruire l'élément amovible. Les éléments amovibles connus ne permettent pas de satisfaire ce besoin, en particulier du fait qu'ils comportent un boîtier étanche dont le rôle est d'éviter que des gaz de coupure ne puissent s'échapper librement hors de l'élément amovible.

C'est à ces inconvénients qu'entend plus particulièrement remédier l'invention, en proposant un élément amovible de coupure d'un courant électrique qui autorise une inspection visuelle de façon non destructive, tout en garantissant une bonne étanchéité vis-à-vis des gaz de coupure.

A cet effet, l'invention concerne un élément amovible de coupure d'un courant électrique comprenant :
- une première partie de boîtier et une deuxième partie de boîtier aptes à être emboîtées entre elles et déplaçables réversiblement l'une par rapport à l'autre entre une configuration assemblée et une configuration partiellement désassemblée,
- des contacts électriques fixes, solidaires de la première partie de boîtier,
- des contacts électriques mobiles déplaçables par rapport aux contacts électriques fixes, ces contacts électriques mobiles étant logés dans la deuxième partie de boîtier et étant déplaçables par rapport à la deuxième partie de boîtier,
la première partie de boîtier comportant des parois latérales pourvues de fenêtres d'inspection traversantes,
la deuxième partie de boîtier comportant des parois d'isolement qui délimitent chacune un volume au sein de la deuxième partie de boîtier autour d'un conducteur mobile correspondant,
les premières et deuxième parties de boîtier étant agencées entre elles de sorte que, dans la configuration assemblée, les parois d'isolement masquent les fenêtres d'inspection et que dans la configuration intermédiaire, les parois d'isolement sont éloignées des fenêtres d'inspection pour libérer l'accès aux fenêtres d'inspection.

Grâce à l'invention, l'élément amovible autorise un accès visuel aux contacts électriques fixes et mobiles pour une inspection visuelle, malgré la présence des parois d'isolement, tout en conservant une bonne étanchéité vis-à-vis des gaz de coupure. Plus précisément, la structure du boîtier séparé en première et deuxième parties déplaçables, ainsi que l'agencement des parois d'isolement par rapport aux parois latérales, permet d'ouvrir sélectivement les fenêtres d'isolement pour regarder au travers afin d'inspecter l'intérieur du boîtier, et de refermer ces fenêtres d'inspection lorsque l'élément amovible est en fonctionnement, pour empêcher des fuites de gaz de coupure au travers de ces fenêtres d'isolement. Autrement dit, la présence des fenêtres n'est pas préjudiciable à l'étanchéité de l'ensemble.

Selon des aspects avantageux mais non obligatoires de l'invention, un tel élément amovible peut incorporer une ou plusieurs des caractéristiques suivantes, prises isolément ou suivant toute combinaison techniquement admissible :
- Les parois d'isolement comportent des organes de retenue qui coopèrent avec la première partie de boîtier pour limiter le déplacement des première et deuxième parties de boîtier depuis la configuration assemblée vers la configuration partiellement désassemblée.
- Les première et deuxième parties de boîtier sont en outre déplaçables depuis la position partiellement désassemblée vers une position démontée, dans laquelle les première et deuxième parties de boîtier sont séparées l'une de l'autre.
- Les organes de retenue sont aptes à être écartés réversiblement de la première partie de boîtier pour autoriser le passage des première et deuxième parties de boîtier depuis la configuration partiellement désassemblée vers la configuration démontée.
- Les première et deuxième parties de boîtier comportent des organes de fixation complémentaires l'un par rapport à l'autre pour solidariser les première et deuxième parties de boîtier l'une avec l'autre dans la configuration assemblée.
- La deuxième partie de boîtier est pourvue d'une plaque de fond qui contient au moins un canal d'évacuation des gaz de coupure raccordant fluidiquement un orifice d'entrée, débouchant dans un volume délimité par des parois d'isolement à l'intérieur du boîtier, vers un orifice de sortie, débouchant à l'extérieur du boîtier.
- Les parois d'isolement et les parois latérales s'étendent parallèlement selon une même direction, et en ce que le déplacement des première et deuxième parties de boîtier est réalisé par translation selon ladite direction.
- Les fenêtres d'inspection sont ménagées au niveau des contacts électriques fixes de manière à permettre leur observation au travers des fenêtres d'inspection lorsque celles-ci sont libérées.
- Les fenêtres d'inspection présentent une forme oblongue orientée parallèlement à la direction de déplacement des contacts électriques mobiles.

Selon un autre aspect, l'invention concerne un appareil électrique de coupure d'un courant électrique comprenant une embase comportant un ou plusieurs logements et un élément amovible de coupure d'un courant électrique, destiné à être reçu dans un des logements de l'embase, de sorte à ce que les contacts électriques fixes de l'élément amovible de coupure soient raccordés électriquement à des plages de connexion de l'appareil de coupure. Conformément à l'invention, l'élément amovible de coupure est tel que décrit précédemment.

L'invention sera mieux comprise et d'autres avantages de celle-ci apparaitront plus clairement à la lumière de la description qui va suivre, d'un mode de réalisation d'un élément amovible de coupure donnée uniquement à titre d'exemple et faite en référence aux dessins annexés, dans lesquels :
- la figure 1 est une représentation schématique, selon une vue en perspective, d'un appareil électrique de coupure comportant un élément amovible de coupure conforme à l'invention ;
- la figure 2 est une représentation schématique, selon une vue en coupe longitudinale, de première et deuxième parties de l'élément amovible de coupure de la figure 1, selon une vue éclatée ;
- la figure 3 est une représentation schématique, selon une vue de profil, de l'élément amovible de coupure des figures 1 et 2, selon une première configuration ;
- la figure 4 est une représentation schématique d'une portion de l'élément amovible de coupure de la figure 3, illustré dans le plan de coupe IV-IV ;
- la figure 5 est une représentation schématique, selon une vue de profil, de l'élément amovible de coupure de la figure 3, selon une deuxième configuration ;
- la figure 6 est une représentation schématique d'une portion de l'élément amovible de coupure de la figure 5, illustré dans le plan de coupe VI-VI ;
- la figure 7 est une représentation schématique de l'élément amovible de coupure de la figure 5, selon une vue en perspective ;
- la figure 8 est une représentation schématique, selon une vue écorchée, d'une portion VIII de l'élément amovible de coupure de la figure 9 ;
- la figure 9 est une représentation schématique, selon une vue de dessus, de la deuxième partie de l'élément amovible de coupure de la figure 2 ;
- la figure 10 est une représentation schématique, selon une vue de face, de la deuxième partie de l'élément amovible de coupure de la figure 9.

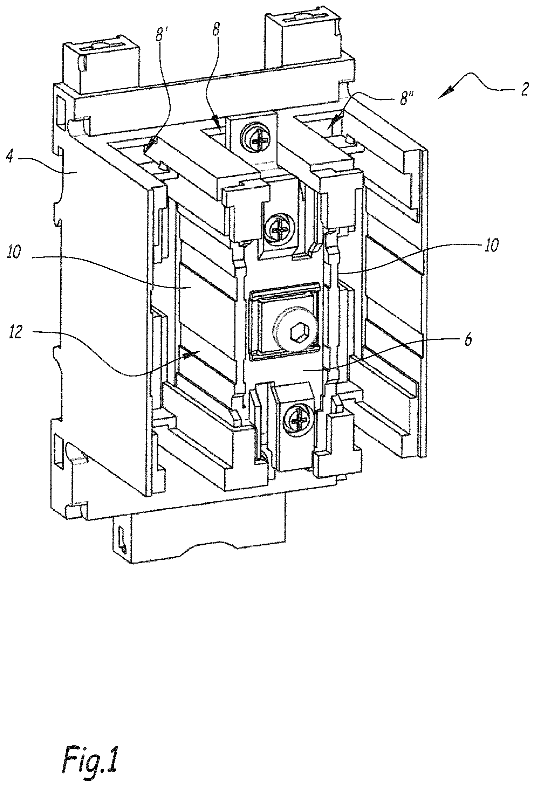

La figure 1 représente un appareil électrique 2 de coupure d'un courant électrique, tel qu'un contacteur industriel. L'appareil électrique 2 est par exemple destiné à être connecté à une ligne électrique d'alimentation d'un moteur électrique.

L'appareil électrique 2 a pour fonction d'interrompre sélectivement un courant électrique circulant au travers d'une ou de plusieurs conducteurs de courant, par exemple un courant électrique alternatif polyphasé.

L'appareil électrique 2 comporte ici une embase 4, par exemple destinée à être installée dans un tableau électrique, et un ou plusieurs éléments amovibles 6 de coupure d'un courant électrique, ici nommés « ampoules de coupure ». Chaque élément amovible 6 est adapté pour interrompre un courant électrique, par exemple une phase électrique d'un courant polyphasé.

L'appareil électrique 2 comporte également un actionneur commandable, non illustré, destiné à être reçu sur une face avant de l'embase 4 pour commander les éléments amovibles 6.

Dans cet exemple illustratif, l'appareil électrique 2 est adapté pour interrompre un courant triphasé comportant trois phases électriques, et est donc adapté pour accueillir trois éléments amovibles 6, chacun associé à une de ces phases électriques.

L'embase 4 comporte ici des logements 8, 8' et 8", au nombre de trois et identiques entre eux, chacun adapté pour recevoir un élément amovible 6. Les logements 8, 8' et 8" sont à cet effet de forme complémentaire à celle des éléments amovibles 6.

Les logements 8, 8' et 8" sont ici séparés deux à deux par des parois de séparation 10 qui sont de préférence réalisées en un matériau électriquement isolant, tel qu'une matière plastique. Les parois de séparation 10 comportent ici des rainures 12 pour guider l'insertion de l'élément amovible 6.

En variante, le nombre d'éléments amovibles 6 peut être différent. L'embase 4 est alors adaptée en conséquence.

Pour simplifier la figure 1, un seul exemplaire de l'élément amovible 6 est illustré. Dans cet exemple, les éléments amovibles 6 sont identiques entre eux. L'élément amovible 6 est illustré reçu à l'intérieur du logement 8.

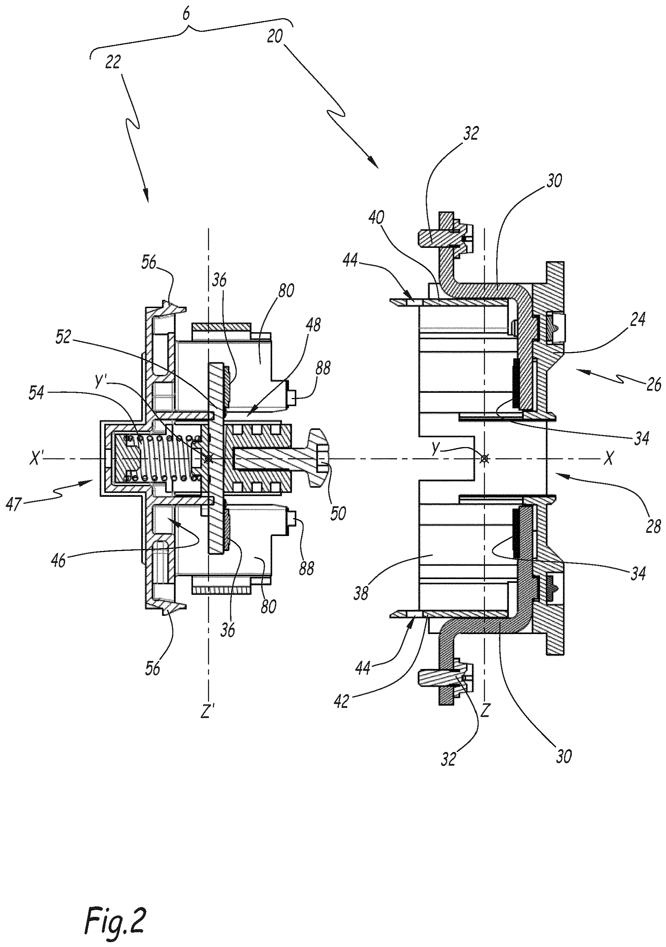

Comme illustré à la figure 2, l'élément amovible 6 comporte un boîtier formé d'une première partie 20 de boîtier et d'une deuxième partie 22 de boîtier, aptes à être emboîtées entre elles pour former l'élément amovible 6.

Les première et deuxième parties 20, 22 sont ici distinctes et déplaçables, sélectivement et réversiblement, l'une par rapport à l'autre, entre plusieurs configurations distinctes. Dans cet exemple, comme expliqué plus en détail dans ce qui suit, les parties 20 et 22 sont déplaçables entre :
- une configuration assemblée, dans laquelle les parties 20 et 22 sont complètement emboîtées l'une avec l'autre, et
- une configuration intermédiaire, aussi dite « configuration d'observation » ou « partiellement désassemblée », dans laquelle la deuxième partie 22 est partiellement emboîtée avec la première partie 20.

Optionnellement, les parties 20 et 22 sont également déplaçables dans une configuration démontée, dans laquelle les parties 20 et 22 sont complètement séparées l'une de l'autre.

La configuration assemblée correspond à la configuration de fonctionnement de l'élément amovible 6, lui permettant d'être reçu dans l'embase 4. A des fins d'illustration, la figure 2 représente les parties 20 et 22 dans leur configuration démontée.

La première partie 20, aussi dite partie avant, comporte une première plaque de fond 24, qui forme une face avant 26 essentiellement plane de l'élément amovible 6. La face avant 26 est pourvue d'une fenêtre traversante 28.

La partie avant 20 comporte en outre des terminaux de raccordement 30, fixés sur la plaque de fond 24 et qui sont destinés à être raccordés à des plages de connexion électriques de l'appareil 2, de manière à connecter l'élément amovible 6 à un circuit électrique. Ces terminaux 30 sont ici au nombre de deux et sont isolés électriquement l'un de l'autre.

Par exemple, les terminaux 30 s'étendent depuis l'intérieur de la partie avant 20, vers l'extérieur de celle-ci, et sont maintenus fixés aux plages de connexion au moyen de vis de maintien 32. Ces terminaux 30 comportent des contacts électriques fixes 34, qui sont destinés à coopérer avec des contacts électriques mobiles 36 de l'élément amovible 6. Ces contacts fixes 34 sont ici reçus à l'intérieur de la partie avant 20.

Dans cet exemple, la partie avant 20 présente une forme oblongue s'étendant suivant un axe longitudinal Z. L'axe Z correspond ici à une direction verticale lorsque l'élément amovible 6 est reçu à l'intérieur de l'embase 4. Par exemple, les deux terminaux 30 s'étendent parallèlement à cet axe Z.

On note « X » un axe perpendiculaire à la face avant 26 et à l'axe longitudinal Z de la partie avant 20. On note « Y » un axe transversal de la partie avant 20, cet axe transversal Y étant perpendiculaire aux axes X et Z.

La partie avant 20 comporte ici des parois latérales 38 qui s'étendent parallèlement de part et d'autre d'un plan médian longitudinal de la partie avant 20, perpendiculairement à l'axe Y. Ces parois latérales 38 définissent ici un volume intérieur destiné à recevoir la partie arrière 22 dans la configuration assemblée.

Les parois latérales 38 sont ici pourvues d'évidements latéraux 46 dont le rôle est expliqué dans ce qui suit.

De façon optionnelle, la partie avant 20 comporte des organes de fixation 44, dont le rôle est décrit plus en détail dans ce qui suit. Ces parois organes de fixation 44 sont ici portés par des parois supérieure 40 et inférieure 42, qui s'étendent parallèlement à un plan médian transversal parallèle aux axes X et Y.

La partie arrière 22 du boîtier comporte une deuxième plaque de fond 46, qui forme ici une face arrière 47 essentiellement plane de l'élément amovible 6. La partie arrière 22 s'étend selon un axe longitudinal Z'. On note « X' » un axe perpendiculaire à l'axe « Z' » et à la face arrière 52. On note en outre « Y' » un axe transversal qui s'étend perpendiculairement aux axes X' et Z'.

Dans la configuration assemblée de l'élément amovible 6, les plaques de fond 24 et 46 sont opposées et se font face l'une avec l'autre. Les axes Z et Z' sont alors confondus entre eux. Il en va de même pour les axes X et X' ainsi que pour les axes Y et Y'.

La partie arrière 22 comporte les contacts mobiles 36. Ces contacts mobiles 36 sont ici au nombre de deux et sont connectés électriquement l'un avec l'autre.

Dans la configuration assemblée de l'élément amovible 6, les contacts mobiles 36 sont disposés en regard des contacts fixes 34 correspondants.

Les contacts mobiles 36 sont sélectivement et réversiblement déplaçables par rapport aux contacts fixes 34, entre une position ouverte et une position fermée, distinctes l'une de l'autre. Ce déplacement est ici réalisé en translation selon une direction de déplacement ici parallèle à l'axe X'.

Dans la position ouverte, les contacts électriques 34 et 36 sont éloignés l'un de l'autre et sont ainsi isolés électriquement l'un de l'autre par l'air ambiant. Dans la position fermée, chacun des contacts 34 est mis en contact avec un contact mobile 36 correspondant, autorisant le passage d'un courant électrique entre les deux terminaux 30. Ce contact est avantageusement assuré grâce à des pastilles de contact portées par les contacts électriques 34 et 36.

Pour assurer ce déplacement, la partie arrière 22 comporte ici un porte-contact mobile 48 déplaçable en translation selon l'axe X' par rapport à la plaque de fond 46. Ce porte-contact mobile 48 comporte un organe de préhension 50 ainsi qu'un élément 52 électriquement conducteur, communément appelé pont mobile, ici en forme de plaquette, qui raccorde les contacts mobiles 36 l'un avec l'autre.

L'organe de préhension 50 est destiné à être couplé mécaniquement avec l'actionneur de l'appareil de coupure 2, pour entraîner le déplacement des contacts mobiles 36 entre les positions ouverte et fermée. Dans la configuration assemblée de l'élément amovible 6, la fenêtre 28 permet le passage du porte contact équipé de son organe de préhension 50.

Par exemple, le porte-contact mobile 48 comporte un corps en matière électriquement isolante qui est solidaire de l'élément 52 et sur lequel est monté l'organe de préhension 50. L'organe de préhension 50 est ici une tête de vis.

Le porte-contact mobile 48 comporte également un organe de rappel élastique 54, tel qu'un ressort hélicoïdal, agencé pour exercer une force de rappel sur le pont mobile 52, selon la direction de déplacement X', de manière à ramener les contacts mobiles 36 vers la position ouverte lorsqu'aucune force n'est exercée par l'actionneur de l'appareil 2.

A titre d'exemple illustratif, les contacts mobiles 36 sont ici disposés de part et d'autre du pont mobile 52 selon l'axe Z', ce pont mobile 52 occupant une position centrale au sein de la partie arrière 22.

Dans ce mode de réalisation, la partie arrière 22 comporte également des organes de fixation 56, qui sont destinés à coopérer avec les organes de fixation 44 portés par la partie avant 20. Ces organes de fixation 44, 56 permettent de solidariser ensemble les parties 20 et 22 de façon réversible dans leur configuration assemblée.

Ainsi, les parties 20 et 22 sont facilement séparables l'une de l'autre par un opérateur, par exemple pour contrôler visuellement l'intérieur de l'élément amovible 6, puis peuvent être tout aussi facilement réassemblées l'une avec l'autre. Cela facilite la maintenance de l'élément amovible 6 et de l'appareil électrique 2.

Par exemple, les organes 44 et 56 assurent une fixation par encliquetage. L'organe 44 est ici un organe femelle, tel qu'un orifice, alors que l'organe 56 est un organe mâle, tel qu'un crochet déformable, ici formé d'un seul tenant avec la plaque de fond 46. En variante, les organes 44 et 56 sont respectivement des organes mâle et femelle.

Le déplacement des contacts mobiles 36 par rapport au reste de la partie arrière 22 est ici indépendant du déplacement des parties 20 et 22 entre leurs différentes configurations.

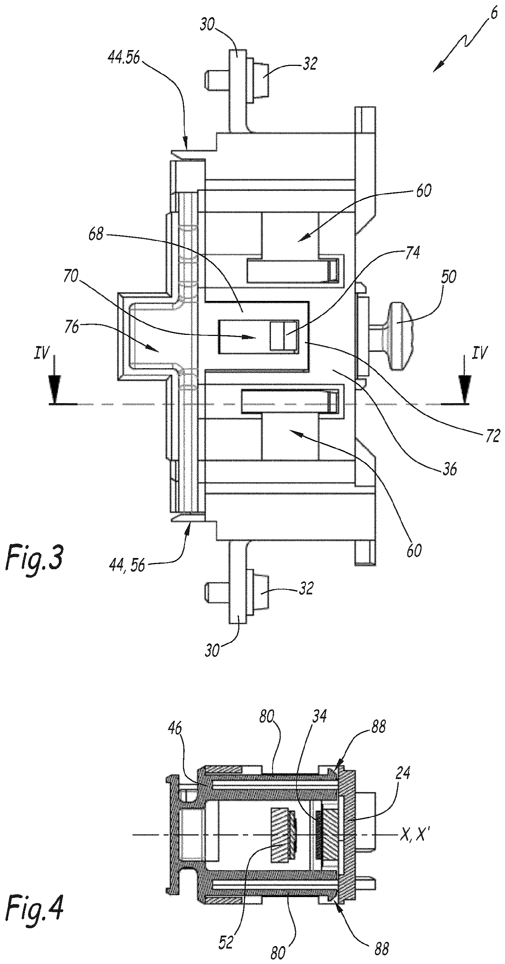

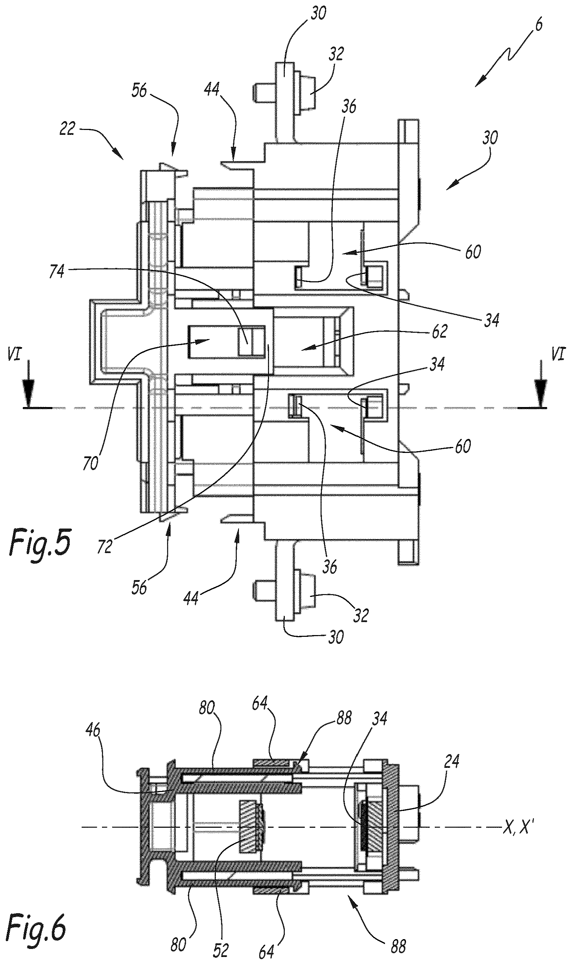

Les figures 3 et 4 illustrent les parties 20 et 22 dans la configuration assemblée et les figures 5 et 6 illustrent les parties 20 et 22 dans la configuration intermédiaire.

La partie avant 20 comporte en outre des fenêtres d'inspection 60 traversantes qui sont ménagées sur les parois latérales 38 par évidement de celles-ci. Les fenêtres d'inspection 60 sont placées au niveau des contacts fixes 34.

De préférence, les fenêtres d'inspection 60 présentent une forme oblongue orientée parallèlement à la direction de déplacement des contacts mobiles 36. Elles présentent ici une forme rectiligne s'étendant notamment parallèlement à l'axe X.

Ces fenêtres d'inspection 60 permettent ainsi d'observer les contacts 34 et 36 dans la configuration intermédiaire et dans la configuration démontée. En revanche, dans la configuration assemblée, les fenêtres d'inspection 60 sont fermées par des parois 80 de la partie arrière 22, comme expliqué dans ce qui suit.

Dans cet exemple, la partie avant 20 comporte quatre telles fenêtres d'inspection 60. Deux fenêtres 60 sont disposées de part et d'autre de chaque contact fixe 34, sur les parois latérales 38 opposées.

Les fenêtres d'inspection 60 associées à un même contact électrique 34 sont préférentiellement placées en face l'une de l'autre, ce qui facilite l'observation.

Les parois latérales 38 comportent également des évidements latéraux 62. Ces évidements 62 sont ici au nombre de deux, chacun étant ménagé sur une des parois latérales 38 et présente une forme rectiligne s'étendant parallèlement à l'axe X.

La partie avant 20 comporte également des parois de blocage 64, dont le rôle est de retenir en butée la partie arrière 22 lorsqu'elle est déplacée depuis la configuration assemblée vers la configuration intermédiaire, comme expliqué dans ce qui suit.

Dans cet exemple, la partie arrière 22 comporte en outre une portion de guidage 66, qui autorise le déplacement en translation de l'ensemble porte contact mobile 52 selon la direction de déplacement X'. La portion de guidage 66 est ici formée au niveau de parois latérales 68 de la partie arrière 22 qui s'étendent de part et d'autre du porte-contact 48 selon des directions parallèles aux axes X' et Z'.

Dans la configuration assemblée, les parois latérales 68 sont reçues dans les évidements latéraux 62. On comprend donc que les formes respectives des parois latérales 68 et des évidements latéraux 62 sont choisies de façon à être complémentaires.

Les parois latérales 68 sont ici de forme plane et comportent une ouverture oblongue 70 s'étendant selon l'axe X' et formant un rail de guidage. L'ouverture 70 est délimitée par des bords 72 qui forment une butée limitant le déplacement du porte-contact 48 selon l'axe X' avec une course prédéfinie.

De façon complémentaire, le porte-contact 48 comporte des crochets 74 qui sont reçus à l'intérieur de l'ouverture 70. Ces crochets 74 comportent par exemple un bord incliné destiné à faciliter leur insertion dans l'ouverture 70.

La plaque de fond 46 comporte également un canal 76 d'évacuation des gaz de coupure. Le canal 76 a pour fonction de permettre le refroidissement de gaz de coupure et d'assurer son échappement vers l'extérieur de l'élément amovible 6.

De façon connue, lors de la séparation des contacts électriques 34 et 36 en présence d'un courant électrique, il apparaît un arc électrique qui ionise l'air ambiant, donnant naissance à un gaz de coupure. Ce gaz de coupure présente une température élevée et doit, de préférence, être refroidi avant son rejet à l'extérieur de l'ensemble amovible 6. En effet, ce gaz de coupure est électriquement conducteur lorsqu'il est chaud. S'il est rejeté hors de l'élément amovible 6 sans être suffisamment refroidi, il peut faire courir un risque de rebouclage du courant électrique, c'est-à-dire un court-circuit, entre les plages de connexion de l'appareil 2, ce qui est dangereux et n'est évidemment pas souhaitable.

Ainsi, la deuxième plaque de fond 46 contient avantageusement au moins un canal 76 d'évacuation des gaz de coupure, qui raccorde fluidiquement un orifice d'entrée, débouchant à l'intérieur de la partie avant 20, à un orifice de sortie, débouchant à l'extérieur du boîtier. L'intérieur de la partie avant 20 correspond ici à la face de la plaque de fond 46 qui est tournée à l'opposé de la face arrière 47, i.e. qui est tournée vers la partie avant 20 lorsque l'ensemble 6 est dans la configuration assemblée.

Ce canal d'évacuation 76 peut comporter un chicanage, non illustré, destiné à allonger la trajectoire du gaz de coupure de façon à favoriser son refroidissement.

Par exemple, le canal 76 débouche sur une face extérieure de la plaque de fond 46. La plaque de fond 46 comporte un ou plusieurs d'orifice d'entrée de ce canal 76, comme expliqué dans ce qui suit.

La partie arrière 22 comporte des parois d'isolement 80 latérales qui s'étendent depuis la plaque de fond 46, ici selon la direction X'. Ces parois d'isolement 80 entourent au moins partiellement les contacts électriques 36. Dans cet exemple, les parois d'isolement 80 sont au nombre de deux, chacune entourant un des contacts mobiles 36. Les parois d'isolement 80 sont ici disposées de part et d'autre du pont mobile 52. Dans cet exemple, les parois 80 sont identiques et sont disposés de façon symétrique par rapport au pont mobile 52.

Chaque paroi d'isolement 80 délimite un volume formant une chambre de coupure autour du contact mobile 36 correspondant. Le canal d'évacuation 76 comporte ici un orifice d'entrée dans chacune de ces chambres de coupure. En variante, la plaque de fond 46 peut également comporter plusieurs canaux 76 possédant chacun un orifice d'entrée associé à une seule des chambres de coupure.

De préférence, la hauteur des parois d'isolement 80, mesurée parallèlement à l'axe X', est supérieure ou égale à la course du porte-contact 48 selon l'axe X'.

Ces parois d'isolement 80 sont ainsi disposées parallèlement et en regard des parois latérales 38, parallèlement aux axes X et X'.

Ainsi, le déplacement de parties 20 et 22 entre les différentes configurations est réalisé en translation le long de l'axe X. Par exemple, les parois 38 et 80 sont adjacentes l'une avec l'autre et espacées d'une faible distance, par exemple inférieure ou égale à 0,5mm, cette distance étant mesurée parallèlement à l'axe Y. Une faible distance permet le coulissement des parois 38 et 80 l'une par rapport à l'autre, sans pour autant nuire à l'étanchéité de l'ensemble. En pratique, le jeu entre les parois 38 et 80 est choisi de façon à permettre l'assemblage des pièces ainsi que le coulissement des parties 20 et 22 pour autoriser le déplacement entre les configurations assemblée et intermédiaire et dépend notamment de la taille de l'élément amovible 6. A titre d'illustration, la distance est ici comprise dans l'intervalle [0,4mm - 0,5mm].

Les parois latérales 38 permettent ainsi de guider les parois 80 lors du déplacement de la partie 22 par rapport à la partie 20.

De plus, dans la configuration assemblée, les parois 80 sont situées devant les fenêtres d'inspection 60 de manière à fermer ces fenêtres d'inspection 60. De cette façon, on limite le risque que les gaz de coupure s'échappent hors de l'élément amovible 6 ailleurs que par le canal 76.

En revanche, dans la configuration intermédiaire, les parois 80 sont situées à l'écart des fenêtres d'inspection 60, de manière à libérer ces fenêtres d'inspection 60. En d'autres termes, les fenêtres 60 sont ouvertes dans la configuration intermédiaire. Il en va de même dans la configuration démontée.

A titre d'exemple illustratif, dans la configuration assemblée, les parois 80 sont reçues sur au moins 80% de leur hauteur dans la partie 20, c'est-à-dire que, sur au moins 80% de leur hauteur, les parois 80 chevauchent les parois latérales 38. De façon analogue, dans la configuration intermédiaire, les parois 80 sont reçues sur moins de 10% de leur hauteur dans la partie 20.

De façon avantageuse, les parois 80 comportent des organes de retenue 88 qui sont destinées à coopérer la première partie 20, ici avec les parois de blocage 64, pour retenir la partie 22 par rapport à la partie 20 lorsqu'elles sont déplacées vers la configuration intermédiaire depuis la configuration assemblée. Plus précisément, les organes de retenue 88 viennent en butée contre les parois 64 lorsque la partie 22 est retirée hors de la partie 20. Les organes 88 ont ici la forme de crochets faisant saillie perpendiculairement aux parois 80, parallèlement à l'axe Y'. Ainsi, la course de la partie 22 par rapport à la partie 20 présente une valeur prédéfinie.

Grâce à l'invention, les fenêtres d'isolement 60 peuvent être sélectivement ouvertes pour inspecter l'intérieur du boîtier, par exemple lorsque l'élément 6 est retiré de l'embase lors de maintenance, en commutant l'élément 6 vers la configuration intermédiaire. Puis, lorsque l'élément 6 est replacé dans la configuration assemblée en vue de le remettre en fonctionnement, ces fenêtres 60 sont refermées, ce qui empêche le gaz de fuir au travers de ces fenêtres 60. Grâce à cette étanchéité, les gaz de coupure sont évacués préférentiellement par le biais du canal d'évacuation 76, et sont donc mieux refroidis. Cela limite le risque de rebouclage d'un courant électrique à l'extérieur de l'élément amovible 6. La sécurité et la fiabilité de l'appareil 2 sont donc améliorées.

Ainsi, l'élément 6 permet un examen visuel des contacts électriques 34, 36 grâce aux fenêtres 60, sans que la présence de ces fenêtres 60 ne soit préjudiciable à l'étanchéité de l'ensemble 6. Il n'est pas non plus nécessaire d'endommager le boîtier pour en examiner l'intérieur, puisque son désassemblage est réversible.

En outre, la commutation entre les configurations assemblée et intermédiaire est rapide et simple à réaliser, sans avoir besoin d'outillage spécifique, notamment grâce aux organes de fixation 44 et 62.

Avantageusement, la configuration démontée permet à un opérateur d'accéder à l'intérieur de l'ensemble 6, par exemple pour nettoyer les contacts électriques 34 et 36 et/ou pour les détacher l'un de l'autre en cas de soudure accidentelle. Ce déplacement peut notamment être fait depuis la configuration intermédiaire, en écartant les organes de retenue 88 des parois 64, par exemple en déformant les parois 80. Les parties 20 et 22 peuvent ensuite être replacées dans la configuration intermédiaire en vue de réassembler le boîtier.

De préférence, les parois 80 sont réalisées en un matériau imperméable aux gaz.

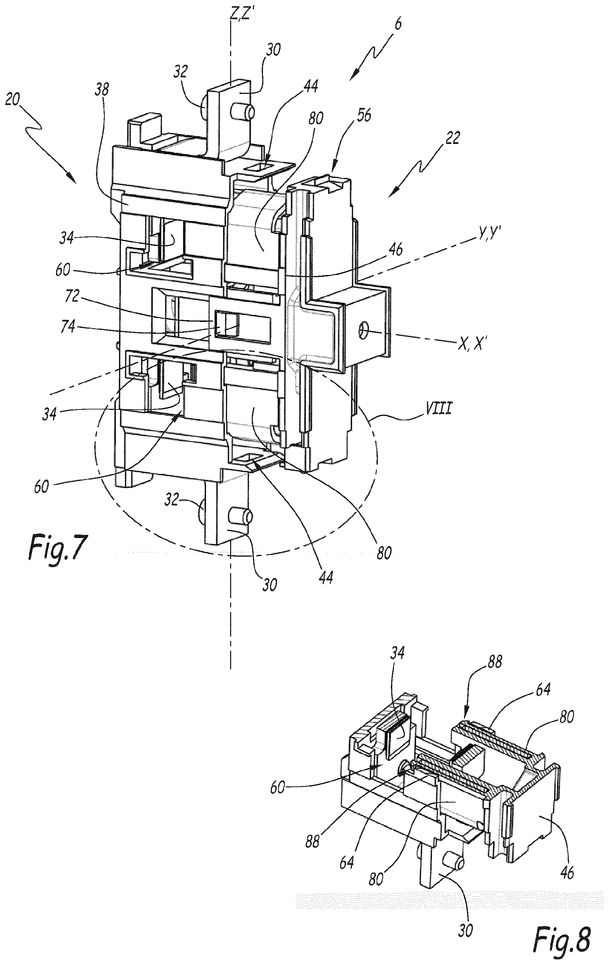

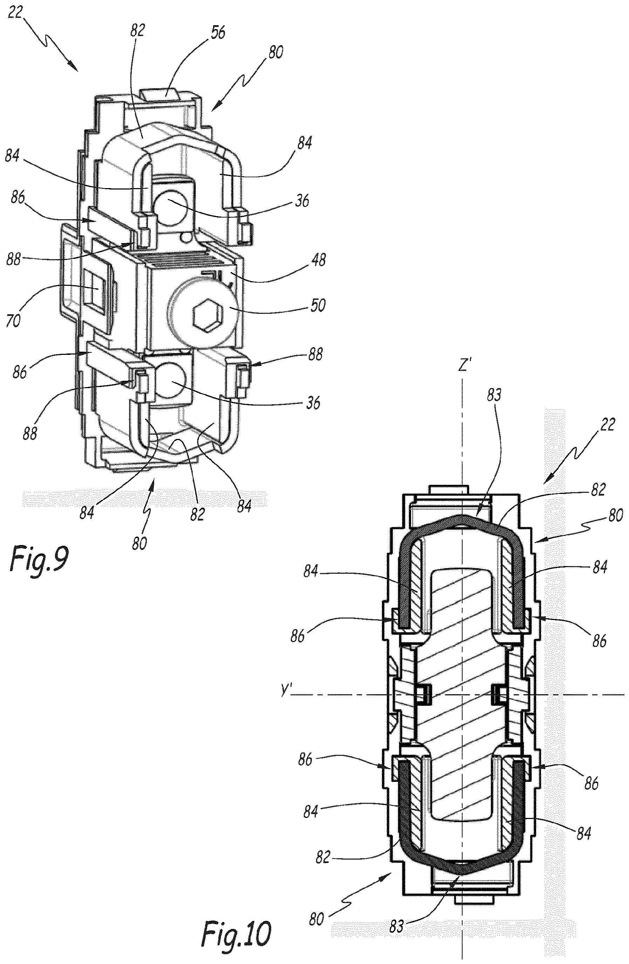

Dans ce mode de réalisation, comme illustré aux figures 7 à 10, les parois d'isolement 80 comportent chacune par une pièce 82, dite « pièce de soufflage », rapportée sur la plaque de fond 46. La pièce de soufflage 82 est réalisée en un matériau magnétique, par exemple un métal ferromagnétique, et a pour fonction de favoriser le soufflage, c'est-à-dire l'extinction, d'un arc électrique qui se forme au niveau du contact mobile 36 correspondant. La pièce 82 exerce un champ magnétique qui guide l'arc électrique vers une zone particulière de la chambre de coupure.

Chaque pièce de soufflage 82 présente ici une forme en U. Plus précisément, la base de cette pièce 82 présente ici une forme en U, la pièce 82 s'étendant par translation depuis cette base parallèlement à l'axe X'. La pièce 82 comporte deux cloisons latérales identiques opposées qui sont placées de part et d'autre du contact mobile 36 correspondant, en s'étendant perpendiculairement à l'axe Y' et parallèlement aux axes X' et Z' et donc perpendiculairement à la plaque de fond 46. Ces cloisons latérales sont reliées entre elles par une cloison recourbée s'élevant parallèlement à l'axe X' et qui forme un fond 83 de la forme en U de la pièce 82. Les cloisons latérales comportent également des bords d'extrémité, situés à l'opposé de la cloison recourbée et s'étendant parallèlement à l'axe X'.

Chaque paroi 80 comporte ici également des plaques de protection 84, qui recouvrent au moins partiellement des faces intérieures de la pièce 82, contre des dommages causés par l'arc électrique. Par « faces intérieures », on désigne les faces qui sont tournées vers le contact mobile 36 correspondant.

De façon optionnelle, les plaques de protection 84 comportent un bord 86 replié qui recouvre et entoure les bords d'extrémité de la pièce 82, ici sur toute leur hauteur. Plus précisément, chaque bord 86 est formé d'un seul tenant avec la plaques 84 correspondante, et s'étend en se prolongeant de façon repliée par rapport à celle-ci, de manière à recouvrir une partie de la face externe de cette pièce 82. Les bords repliés 86 améliorent l'efficacité des plaques de protection 84. En particulier, ils améliorent encore plus l'étanchéité vis-à-vis des gaz de coupure.

Dans cet exemple, les organes 88 sont ménagés sur les plaques 84. En variante, ils peuvent être réalisés différemment.

Les modes de réalisation et les variantes envisagés ci-dessus peuvent être combinés entre eux pour générer de nouveaux modes de réalisation.

## Revendications

1. Elément amovible de coupure (6) d'un courant électrique, comprenant :
- une première partie (20) de boîtier et une deuxième partie (22) de boîtier aptes à être emboîtées entre elles et déplaçables réversiblement l'une par rapport à l'autre entre une configuration assemblée et une configuration partiellement désassemblée,
- des contacts électriques fixes (34), solidaires de la première partie (20) de boîtier,
- des contacts électriques mobiles (36) déplaçables par rapport aux contacts électriques fixes (34), ces contacts électriques mobiles (36) étant logés dans la deuxième partie de boîtier (22) et étant déplaçables par rapport à la deuxième partie de boîtier (22),
la première partie de boîtier (20) comportant des parois latérales (38) pourvues de fenêtres d'inspection (60) traversantes,
la deuxième partie de boîtier (22) comportant des parois d'isolement (80) qui délimitent chacune un volume au sein de la deuxième partie de boîtier (22) autour d'un conducteur mobile (36) correspondant,
les premières et deuxième parties de boîtier (20, 22) étant agencées entre elles de sorte que, dans la configuration assemblée, les parois d'isolement (80) masquent les fenêtres d'inspection (60) et que dans la configuration intermédiaire, les parois d'isolement (80) sont éloignées des fenêtres d'inspection (60) pour libérer l'accès aux fenêtres d'inspection (60).

2. Elément amovible de coupure (6) selon la revendication 1, **caractérisé en ce que** les parois d'isolement (80) comportent des organes de retenue (88) qui coopèrent avec la première partie de boîtier (20) pour limiter le déplacement des première et deuxième parties de boîtier (20, 22) depuis la configuration assemblée vers la configuration partiellement désassemblée.

3. Elément amovible de coupure (6) selon la revendication 1 ou 2, **caractérisé en ce que** les première et deuxième parties de boîtier (20, 22) sont en outre déplaçables depuis la position partiellement désassemblée vers une position démontée, dans laquelle les première et deuxième parties de boîtier (20, 22) sont séparées l'une de l'autre.

4. Elément amovible de coupure (6) selon les revendications 2 et 3, **caractérisé en ce que** les organes de retenue (88) sont aptes à être écartés réversiblement de la première partie (20) de boîtier pour autoriser le passage des première et deuxième parties de boîtier (20, 22) depuis la configuration partiellement désassemblée vers la configuration démontée.

5. Elément amovible de coupure (6) selon l'une quelconque des revendications précédentes, **caractérisé en ce que** les première et deuxième parties de boîtier (20, 22) comportent des organes de fixation (44, 56) complémentaires l'un par rapport à l'autre pour solidariser les première et deuxième parties de boîtier (20, 22) l'une avec l'autre dans la configuration assemblée.

6. Elément amovible de coupure (6) selon l'une quelconque des revendications précédentes, **caractérisé en ce que** la deuxième partie de boîtier (22) est pourvue d'une plaque de fond (46) qui contient au moins un canal (76) d'évacuation des gaz de coupure raccordant fluidiquement un orifice d'entrée, débouchant dans un volume délimité par des parois d'isolement (80) à l'intérieur du boîtier, vers un orifice de sortie, débouchant à l'extérieur du boîtier.

7. Elément amovible de coupure (6) selon l'une quelconque des revendications précédentes, **caractérisé en ce que** les parois d'isolement (80) et les parois latérales (38) s'étendent parallèlement selon une même direction (X, X'), et **en ce que** le déplacement des première et deuxième parties de boîtier (20, 22) est réalisé par translation selon ladite direction (X, X').

8. Elément amovible de coupure (6) selon l'une quelconque des revendications précédentes, **caractérisé en ce que** les fenêtres d'inspection (60) sont ménagées au niveau des contacts électriques fixes (34) de manière à permettre leur observation au travers des fenêtres d'inspection (60) lorsque celles-ci sont libérées.

9. Elément amovible de coupure (6) selon la revendication 8, **caractérisé en ce que** les fenêtres d'inspection (60) présentent une forme oblongue orientée parallèlement à la direction de déplacement des contacts électriques mobiles (36).

10. Appareil électrique (2) de coupure d'un courant électrique, comprenant :
- une embase (4) comportant un ou plusieurs logements (8, 8', 8") ;
- un élément amovible de coupure (6) d'un courant électrique, destiné à être reçu dans un des logements (8, 8', 8") de l'embase, de sorte à ce que les contacts électriques fixes (34) de l'élément amovible de coupure (6) soient raccordés électriquement à des plages de connexion de l'appareil de coupure ;
**caractérisé en ce que** l'élément amovible de coupure (6) est selon l'une quelconque des revendications précédentes.

## Patentansprüche

1. Entfernbares Element (6) zum Trennen eines elektrischen Stroms, umfassend
- ein erstes Gehäuseteil (20) und ein zweites Gehäuseteil (22), die geeignet sind, ineinanderzugreifen und reversibel zueinander zwischen einer zusammengesetzten Konfiguration und einer teilweise auseinandergenommenen Konfiguration bewegbar sind,
- feststehende elektrische Kontakte (34), die mit dem ersten Gehäuseteil (20) verbunden sind,
- bewegliche elektrische Kontakte (36), die in Bezug auf die feststehenden elektrischen Kontakte (34) verschiebbar sind, wobei diese beweglichen elektrischen Kontakte (36) in dem zweiten Gehäuseteil (22) aufgenommen sind und in Bezug auf das zweite Gehäuseteil (22) beweglich sind, wobei
das erste Gehäuseteil (20) Seitenwände (38) aufweist, die mit hindurchgehenden Inspektionsfenstern (60) versehen sind,
das zweite Gehäuseteil (22) Isolierwände (80) aufweist, die jeweils ein Volumen an dem zweiten Gehäuseteil (22) um einen entsprechenden beweglichen Leiter (36) begrenzen,
das erste und zweite Gehäuseteil (20, 22) untereinander derart angeordnet sind, dass in der zusammengesetzten Konfiguration die Isolierwände (80) die Inspektionsfenster (60) verdecken und in der Zwischenkonfiguration die Isolierwände (80) von den Inspektionsfenstern (60) entfernt sind, um den Zugang zu den Inspektionsfenstern (60) freizugeben.

2. Entfernbares Trennelement (6) nach Anspruch 1, **dadurch gekennzeichnet, dass** die Isolierwände (80) Halteelemente (88) aufweisen, die mit dem ersten Gehäuseteil (20) zusammenarbeiten, um die Bewegung des ersten und des zweiten Gehäuseteil (20, 22) von der zusammengesetzten Konfiguration zu der teilweise auseinandergenommenen Konfiguration zu begrenzen.

3. Entfernbares Trennelement (6) nach Anspruch 1 oder 2, **dadurch gekennzeichnet, dass** das erste und zweite Gehäuseteil (20, 22) außerdem von der teilweise zusammengesetzten Position zu einer zerlegten Position bewegbar sind, in der das erste und zweite Gehäuseteil (20, 22) zueinander getrennt sind.

4. Entfernbares Trennelement (6) nach Anspruch 2 und 3, **dadurch gekennzeichnet, dass** die Halteelemente (88) geeignet sind, reversibel von dem ersten Gehäuseteil (20) beabstandet zu werden, um den Übergang des ersten und zweiten Gehäuseteils (20, 22) von der teilweise auseinandergenommenen Konfiguration in die zerlegte Konfiguration zu ermöglichen.

5. Entfernbares Trennelement (6) nach einem beliebigen der vorhergehenden Ansprüche, **dadurch gekennzeichnet, dass** das erste und zweite Gehäuseteil (20, 22) Befestigungselemente (44, 56) aufweisen, die komplementär zueinander sind, um das erste und zweite Gehäuseteil (20, 22) in der zusammengesetzten Konfiguration miteinander zu verbinden.

6. Entfernbares Trennelement (6) nach einem beliebigen der vorhergehenden Ansprüche, **dadurch gekennzeichnet, dass** das zweite Gehäuseteil (22) mit einer Bodenplatte (46) versehen ist, die mindestens einen Kanal (76) zum Abführen von Trenngasen enthält, der fluidisch eine Eingangsöffnung, die in ein von den Isolierwänden (80) im Inneren des Gehäuses begrenztes Volumen mündet, mit einer Ausgangsöffnung, die in den Außenraum des Gehäuses mündet, verbindet.

7. Entfernbares Trennelement (6) nach einem beliebigen der vorhergehenden Ansprüche, **dadurch gekennzeichnet, dass** die Isolierwände (80) und die Seitenwände (38) sich parallel gemäß einer selben Richtung (X, X') erstrecken und dass die Bewegung des ersten und zweiten Gehäuseteils (20, 22) durch eine Längsverschiebung gemäß der Richtung (X, X') realisiert ist.

8. Entfernbares Trennelement (6) nach einem beliebigen der vorhergehenden Ansprüche, **dadurch gekennzeichnet, dass** die Inspektionsfenster (60) an den feststehenden elektrischen Kontakten (34) derart eingebracht sind, dass ihre Beobachtung durch die Inspektionsfenster (60) hindurch möglich ist, wenn diese freigelegt sind.

9. Entfernbares Trennelement (6) nach Anspruch 8, **dadurch gekennzeichnet, dass** die Inspektionsfenster (60) eine längliche Form aufweisen, die parallel zur Verschiebungsrichtung der beweglichen elektrischen Kontakte (36) orientiert ist.

10. Elektrisches Gerät (2) zum Trennen eines elektrischen Stroms, umfassend:
- einen Sockel (4), der einen oder mehrere Aufnahmeräume (8, 8', 8") aufweist;
- ein entfernbares Element (6) zum Trennen eines elektrischen Stroms, das vorgesehen ist, in einem der Aufnahmeräume (8, 8', 8") des Sockels aufgenommen zu werden, derart dass die feststehenden elektrischen Kontakte (34) des entfernbaren Trennelementes (6) elektrisch mit Kontaktstellen des Trenngerätes verbunden werden;
**dadurch gekennzeichnet, dass** das entfernbare Trennelement (6) nach einem der vorhergehenden Ansprüche ausgebildet ist.

## Claims

1. Removable interrupting element (6) for an electric current, comprising
- a first housing part (20) and a second housing part (22) which are capable of being fitted together and are reversibly displaceable relative to one another between an assembled configuration and a partially disassembled configuration,
- fixed electrical contacts (34) which are secured to the first housing part (20),
- movable electrical contacts (36) which are displaceable relative to the fixed electrical contacts (34), the movable electrical contacts (36) being housed in the second housing part (22) and being displaceable relative to the second housing part (22),
the first housing part (20) having lateral walls (38) provided with through inspection windows (60),
the second housing part (22) having insulating walls (80) which each delimit a volume within the second housing part (22) around a corresponding movable conductor (36),
the first and second housing parts (20, 22) being so arranged relative to one another that, in the assembled configuration, the insulating walls (80) conceal the inspection windows (60) and, in the intermediate configuration, the insulating walls (80) are moved away from the inspection windows (60) in order to free access to the inspection windows (60).

2. Removable interrupting element (6) according to claim 1, **characterised in that** the insulating walls (80) comprise retaining members (88) which cooperate with the first housing part (20) to limit the displacement of the first and second housing parts (20, 22) from the assembled configuration to the partially disassembled configuration.

3. Removable interrupting element (6) according to claim 1 or 2, **characterised in that** the first and second housing parts (20, 22) are further displaceable from the partially disassembled position to a dismantled position in which the first and second housing parts (20, 22) are separated from one another.

4. Removable interrupting element (6) according to claims 2 and 3, **characterised in that** the retaining members (88) are capable of being reversibly moved away from the first housing part (20) in order to allow the first and second housing parts (20, 22) to pass from the partially disassembled configuration to the dismantled configuration.

5. Removable interrupting assembly (6) according to any one of the preceding claims, **characterised in that** the first and second housing parts (20, 22) comprise mutually complementary fixing members (44, 56) for securing the first and second housing parts (20, 22) together in the assembled configuration.

6. Removable interrupting element (6) according to any one of the preceding claims, **characterised in that** the second housing part (22) is provided with a base plate (46) which contains at least one channel (76) for evacuating the breaking gases which fluidically connects an input orifice, opening into a volume delimited by insulating walls (80) inside the housing, to an output orifice opening outside the housing.

7. Removable interrupting element (6) according to any one of the preceding claims, **characterised in that** the insulating walls (80) and the lateral walls (38) extend in parallel in the same direction (X, X'), and **in that** the displacement of the first and second housing parts (20, 22) is carried out by translation in said direction (X, X').

8. Removable interrupting element (6) according to any one of the preceding claims, **characterised in that** the inspection windows (60) are formed at the level of the fixed electrical contacts (34) so as to allow the fixed electrical contacts to be observed through the inspection windows (60) when the inspection windows are freed.

9. Removable interrupting element (6) according to claim 8, **characterised in that** the inspection windows (60) have an oblong shape oriented parallel to the direction of displacement of the movable electrical contacts (36).

10. Electrical apparatus (2) for interrupting an electric current, comprising:
- a base (4) having one or more receivers (8, 8', 8");
- a removable interrupting element (6) for an electric current which is to be received in one of the receivers (8, 8', 8") of the base so that the fixed electrical contacts (34) of the removable interrupting element (6) are electrically connected to connection pads of the interrupting apparatus;
**characterised in that** the removable interrupting element (6) is according to any one of the preceding claims.
